# NEW EUROPEAN PATENT SPECIFICATION

(11) **EP 0 824 857 B2**
(45) Date of publication and mention of the opposition decision: **13.06.2012**
(45) Mention of the grant of the patent: 09.11.2005
(21) Application number: 97202454.1
(22) Date of filing: 08.08.1997
(51) Int. Cl.: A01J 5/017

(54) **A method of automatically connecting teat cups to the teats of an animal to be milked**
Verfahren zum automatischen Anbringen von Melkbechern an den Zitzen eines zum melkenden Tieres
Méthode de connexion automatique de gobelets trayeurs aux pis d'un animal à traire

(30) Priority: 16.08.1996 EP 96202302
(43) Date of publication of application: 25.02.1998
(60) Divisional application: 05076028.9
(73) Proprietor: MAASLAND N.V., 3147 PA Maassluis (NL)
(72) Inventor: van den Berg, Karel, 2971 BR Bleskensgraaf (NL)
(74) Representative: Corten, Maurice Jean F.M.

(56) References cited:
- EP-A- 0 360 354
- EP-A- 0 611 004
- EP-A- 0 661 517
- GB-A- 2 226 941
- US-A- 4 223 635
- US-A- 4 223 635
- US-A- 4 320 718

## Description

The invention relates to a method of automatically connecting a teat cup to a teat of an animal to be milked according to the preamble of claim 1.

Such a method is known from EP-A-0360354. In order to connect a teat cup to a teat, after the position of the teat has been determined, the teat cup is moved so that its opening is located under the teat and is subsequently connected thereto in an upward movement. When the teats have an approximately vertical position, such a method of connecting will present few problems. However, when the position of a teat deviates from the vertical plane, the above-mentioned connecting method may lead to problems. For example, a teat may come folded into the teat cup or may be introduced therein insufficiently far, whereafter the teat cup, because of its own weight, will fall from the teat when the latter is released by the robot.

The invention aims at a method in which the above-mentioned drawbacks do not occur or at least are limited to a considerable extent.

In accordance with the invention, this is achieved by means of a method of the sort as defined above comprising the features of the characterizing part of claim 1. In this manner, also teats that are comparatively oblique relative to the vertical plane can be successfully connected to the teat cup.

According to a preferred embodiment, the position of the teat and the angle formed by the teat relative to the vertical plane are programmed by the operator in a computer. In this manner, the farmer is able to determine for each animal or each teat individually whether the described method of connecting the teat cup to the teat is desired. In accordance with a further embodiment, the position of the teat and the angle formed by the teat relative to the vertical plane are determined automatically by means of a sensor, such as a laser. According to again another embodiment, the position of the teat and the angle formed by the teat relative to the vertical plane are determined by means of picture recognition of the teat. In the above-mentioned method, manual inputting of the position of the teat and the angle at which the teats are located is no longer necessary.

Because, during the lactation period of the animal to be milked, the position of the teat and the oblique position thereof may change, according to a further embodiment feature, the position of the teat and the angle formed by the teat relative to the vertical plane are updated in the computer. At a next milking run, it has only to be checked whether the position of the teat and/or the oblique position thereof have/has changed, whereafter the teat cup can be connected.

In accordance with a further embodiment, the frequency at which the teat cup is moved upwards and sidewards during connection to the teat can be determined in that the upward and sideward movement of the teat cup during connection to the teat is effected on the basis of a period of time to be preset, which can be recorded in the computer. According to again another embodiment, it is also possible to have the upward and sideward movement of the teat cup during connection to the teat take place on the basis of the measured vacuum difference in the teat cup. For a proper connection of the teat cup to the teat, during the upward and sideward movement of the teat cup, the vacuum in the teat cup will each time have to increase somewhat. When, after some time, the vacuum has reached a constant value, this is an indication that the teat cup is properly connected to the teat, whereafter the milking can start.

In an embodiment of the invention the movement of the teat in a vertical and in a horizontal direction, consecutively, until it has been connected to the teat is carried out via a previously chosen path. According to a further embodiment, the length and/or the thickness of the teat are/is determined by the operator and programmed in the computer.

In accordance with again another embodiment, it is also possible to determine the length and/or the thickness of the teat by means of a sensor, such as a laser. According to again another embodiment of the invention, it is possible to determine the length and/or the thickness of the teat by means of picture recognition of the teat.

The invention furthermore relates to an implement comprising a milking robot for automatically connecting teat cups to the teats of an animal, respectively disconnecting same therefrom, said implement comprising a computer and an animal identification system in which the position of the teat are recorded per animal, said implement being suitable for applying a method according according to the invention, characterized in that in the animal identification system the angle formed by a teat relative to a vertical plane is recorded per animal. According to again another embodiment, the milking robot comprises a sensor, such as a laser. Additionally it is possible, according to again another embodiment of the invention, to provide the milking robot with a camera and picture recognition means, as well as a telemeter.

In accordance with an other embodiment, a teat cup is provided with a vacuum sensor which is capable of measuring differences in pressure during the connection of the teat cup.

For a better understanding of the invention, reference will now be made to the accompanying drawings, in which:
Figure 1 shows a side view of the implement according to the invention;
Figure 2 shows a plan view of the implement of Figure 1;
Figure 3 shows more in detail how the position of the teat and the angle formed by the teat relative to a vertical plane are determined by means of a laser;
Figure 4 shows a teat cup that is moved upwards vertically to an oblique teat, so that an incorrect connection takes place;
Figure 5 shows step by step how the teat cup is connected to an oblique teat in a correct manner according to the invention.

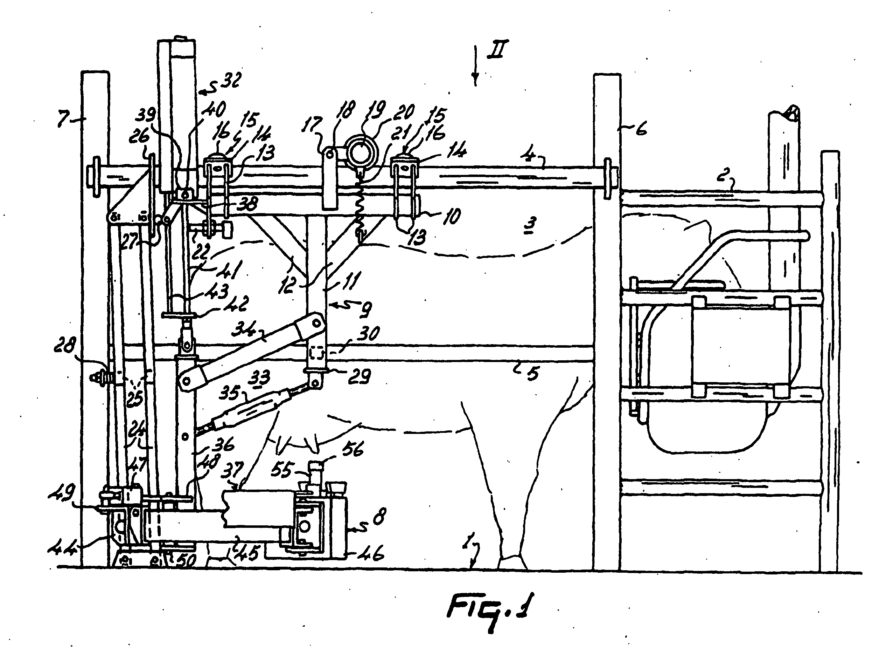

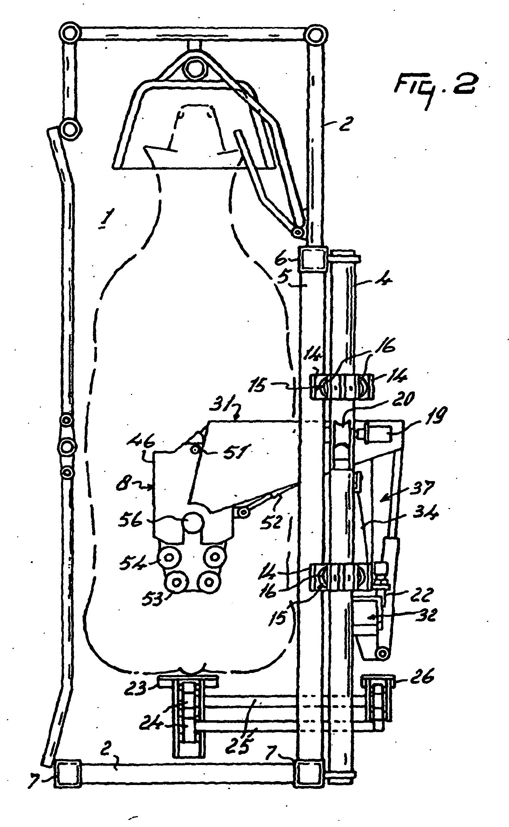

The implement shown in Figures 1 and 2 comprises a milk box 1 surrounded by a fencing 2 allowing the animal a limited freedom of movement. The animal can enter the milk box via a longitudinal side near the rear thereof and leave same via the same longitudinal side near the front thereof. The front side of the milk box being provided with a feeding installation, the cow will advance sufficiently far and will come into a position in which she can be milked easily. At the other longitudinal side of the milk box, being opposite to the one including the entrance and exit, there is provided a fixed frame 3 constituting part of the fencing 2, which frame 3 includes a first frame portion 4 and a second frame portion 5. The first frame portion 4 extends parallel to the second frame portion 5 and is situated substantially thereabove. The first frame portion 4 is fixed to the outside of two vertical stands 6 and 7 constituting part of the fencing 2, while the second frame portion 5 is fixed therebetween. To the first frame portion 4, there is movably attached a milking robot 8 for automatically milking animals, while this milking robot is supported against the second frame portion 5, which is disposed at such a height that the arms of the milking robot 8 are movable therebelow under the cow present in the milk box. The milking robot 8 comprises a carrier frame 9 for its further parts. By designing the upper frame portion 4 as a rail, the carrier frame 9, and consequently the entire milking robot 8, can easily be moved along this frame portion. The carrier frame 9 includes a beam 10 extending substantially parallel to the first frame portion 4, a beam 11 directed vertically downwardly perpendicular to the beam 10 and fixed thereto, and two struts 12. Near the ends of the beam 10, there are provided pairs of supporting elements 13. To each pair of supporting elements 13, by means of supporting plates 14 fixed thereto, at an angle of approximately 45° there are provided two rollers 16, constituting a roller pair 15, the arrangement being such that the carrier frame 9 is suspended easily movably along the upper frame portion 4, therebelow. On the beam 10 of the carrier frame 9, on both sides, there are provided two carriers 17, to which there is movably attached a motor 19 about a pivot shaft 18. By this motor 19 there is driven a roller 20, preferably having a rubber surface, which roller is pushed against the upper frame portion 4 by means of a spring member 21. The spring member 21 being active between the motor 19 and the carrier frame 9, the roller 20 to be driven by the motor 19 is kept pushed against the upper frame portion 4, so that, when the motor is driven, it will be moved along the upper frame portion 4 and, consequently, the entire carrier frame 9 will be moved. To the supporting member 13 which, relative to the milk box, is situated rearmost, there is attached a sensor 22 comprising e.g. a laser. By means of this sensor 22, it is possible to guide the milking robot, in the longitudinal direction of the milk box, from an inoperative position to a starting position, in which the milking robot arms are moved under the animal present in the milk box, and to follow the movements of the animal in the longitudinal direction thereof. For this purpose, the sensor 22 cooperates with a supporting member 23 which is movable against the rear side of the animal. By means of a rod system which, in the present embodiment, is constituted by a quadrangle construction and, in particular, by a parallelogram construction 24, this supporting member 23 is arranged on the milk box floor pivotably relative thereto. By means of two rods 25, the supporting member 23 is provided with a plate 26, extending sidewards outside the frame portions 4, 5, which plate 26 is arranged so as to be able to reflect a signal transmitted by the sensor 22. After the sensor 22 has picked up the reflected signal, it will supply a control signal which is a measure for the actual, i.e. measured, distance between the plate 26 and the sensor 22, by means of which control signal the motor 19 can be operated, while the milking robot 8 is guided in the longitudinal direction of the milk box in such a way that the distance between the plate 26 and the sensor 22 is brought, respectively maintained, at a preset value. In its inoperative position, the milking robot 8 has been moved as rearwardly as possible relative to the frame portions 4 and 5, while pressing, by means of a contact element 27, against the plate 26 and thus keeping the supporting member 23 in its rearmost position. In other words, the supporting member 23 is locked by the milking robot 8 when the latter is in its inoperative position. When, in the longitudinal direction of the milk box, the milking robot is guided from this inoperative position to the starting position in which its arms are moved under the animal present in the milk box, then the supporting member 23 is dislocked and, by means of a spring disposed between the parallelogram construction 24 and the fencing 2, is pushed under spring pressure against the rear side of the relevant animal. Upon a forward or backward movement of the cow, under pressure of the spring 28, the supporting member 23 will always be kept against the rear side of the animal, so that the position of the plate 26 determines that of the animal in the longitudinal direction of the milk box and, by means of the sensor 22, while maintaining the distance in longitudinal direction between the plate 26 and the sensor 22, the milking robot can follow the movements of the cow in the longitudinal direction of the milk box. In the present embodiment, the beam 11 of the carrier frame 9 extends vertically downwardly to somewhat below the second frame portion 5. At the lower side of this beam 11, there is disposed a horizontal, rearwardly extending strip 29 which is provided with a freely rotatable roller element 30. The lower frame portion 5 is constituted by a rail, in particular one designed as a U-shaped beam, while the freely rotatable roller element 30 is arranged in such a way that it is movable between the two upright edges of the U-shaped beam. In this manner, the milking robot 8 is supported against the lower frame portion 5 and, when being moved by means of the motor over the first frame portion 4, can easily move along the second frame portion 5. Besides the carrier frame 9, the milking robot comprises a robot arm construction 31 which, by means of a control cylinder 32, is movable substantially vertically relative to the carrier frame 9. By means of a quadrangle construction 33, the robot arm construction 31 is movably connected with the carrier frame 9. In the embodiment shown, the upper arm 34 of this quadrangle construction 33 has a fixed length, while the lower arm 35 thereof is adjustable in length so as to enable the robot arm construction 31 to be adjusted to a limited extent. The robot arm construction 31 comprises a substantially vertical robot arm 36 as well as robot arms 37 that are movable in a substantially horizontal plane. By means of the quadrangle construction 33, the robot arm 36 is connected with the beam 11 of the carrier frame 9. The control cylinder 32 is active between the carrier frame 9 and the robot arm 36. As, by means of the lower arm 35 of the quadrangle construction 33, the orientation of the robot arm 36 is slightly adjustable, the spatial position of the action point of the control cylinder 32 at the robot arm 36 is not entirely fixed. For that reason, the housing of the control cylinder 32 is provided, at least pivotably to a limited extent, on a carrier plate 38 attached to the beam 10 of the carrier frame 9. On this carrier plate 38 there are disposed supports 39, wherebetween the housing of the control cylinder 32 is capable of being moved about a pivot shaft 40. In the present embodiment, the control cylinder is designed as a servo-pneumatic positioning cylinder. This means that, at the lower end of the piston rod 41, by means of a plate 42 fixed thereto, there is attached a position feedback rod 43, by means of which, in the part of the control cylinder, a potentiometer will deduce a signal indicating the position of the piston rod relative to the cylinder housing, while, with the aid of the signal supplied by the potentiometer, the position of the piston rod 41 relative to the cylinder housing can be post-guided to a preset position. Furthermore, the control cylinder 32 is provided with an overload protection enabling the robot arm construction 31 to be moved into its lowest position, as soon as the animal present in the milk box exercises pressure thereon, e.g. by kicking.

As shown in Figure 2, the milking robot includes arms 44, 45 and 46. The arms 44 and 45 are arranged at a fixed angle of 90° relative to each other. Therefore, the latter arms are moved together, i.e. by a control cylinder 47 provided between a supporting plate 48 attached to the robot arm 36 and a connecting piece 49 disposed between the two arms 44 and 45. The two arms 44 and 45 are pivotable about a substantially vertical pivot shaft 50 between the supporting plate 48 and a supporting plate 48', the latter also being rigidly connected to the robot arm 36, more in particular at the lower end thereof. The arm 46 is pivotable relative to the arm 45 about a substantially vertical pivot shaft 51 and is pivoted relative thereto by means of a control cylinder 52 disposed between the arm 46 and the end of the arm 45 that is situated near the connecting piece 49. Near the end of the arm 46 there are provided the teat cups 53 and 54 to be connected to the teats of the cow (see Figure 1). Between the two teat cups 54 there is disposed a slide, which is movable on the arm 46 and on which there is provided a sensor 55, which by a sectorwise scanning movement can accurately determine the position of the teats and the angle formed by the teats relative to a vertical plane. The robot arms 44 to 46 having been brought to under the cow, they are in a relatively low position, in which the sensor 55 will not yet detect teats. By means of the control cylinder 32, the robot arms 44 to 46 are raised stepwise until the sensor 55 detects one or more teats of the animal. When, for some reason or another, during this upward movement of the robot arms 44 to 46 have been raised to such an extent that the upper side of the sensor 55 pushes against the cow's abdomen, then, by means of a switch 56 provided on the upper side of the sensor 55, a downward movement of the robot arms can be effected, whereafter, by means of the sensor 55, while again stepwise raising the robot arms, the determination of the position of the teats can be repeated.

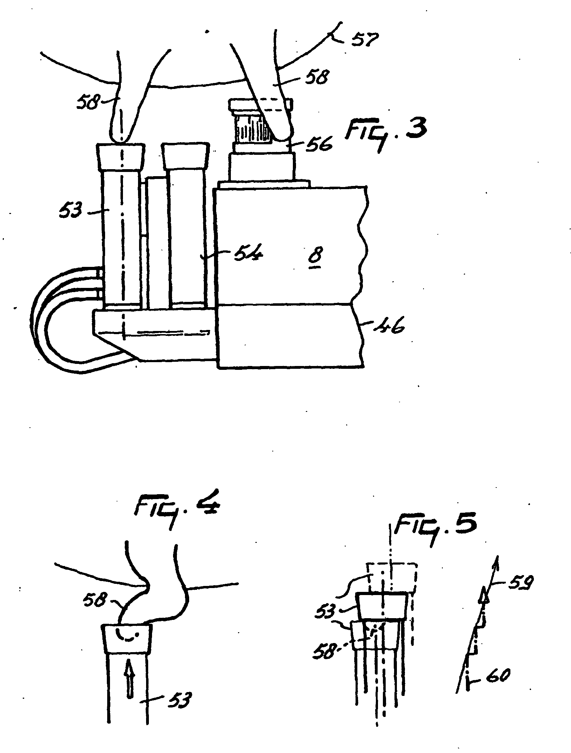

Figure 3 shows the arm 46 of the milking robot 8 in an enlarged view, as well as an udder 57 including teats 58 which are in an oblique position and consequently form an angle relative to a vertical plane. When the teat cup 53, after having been positioned such that its opening is located under the end of the teat 58, is connected to the teat 58 in a customary manner, i.e. exclusively by being moved upwards, then, as shown in Figure 4, said teat cup 53 will be connected incorrectly to the teat 58. In that case only a part of the end of the teat 58 will penetrate into the teat cup 53, whereafter, when the teat cup 53 is disconnected from the arm 46, the teat cup 53 will fall off the teat 58 because of its own weight.

In accordance with the invention, the teat cup 53 will therefore be connected in a manner in which it is brought into the positions shown in Figure 5. After the teat cup 53 has been positioned under the teat 58 as shown in Figure 3, it is moved upwards vertically to a small extent so as to reach the lowest position shown in Figure 5. The end of the teat 58 is then located in the teat cup 53. The teat cup 53 is subsequently moved in a horizontal plane, in this case to the right, and is then moved upwards again, whereafter it reaches the middle position shown in Figure 5. Then the teat cup is moved in a horizontal plane to the right and is thereafter moved upwards again so as to reach the upper position shown in Figure 5. According to the above described procedure, the teat cup 53 is subsequently connected to the teat 58 in a correct manner, i.e. the teat 58 will penetrate sufficiently far into the teat cup 53.

It is additionally possible to execute the upward movement and the sideward movement of the teat cup 53 each time quickly after each other in order to connect the teat cup 53 to the teat 58 in a more or less flowing movement. This flowing movement of the teat cup 53 is shown by the line 59 in Figure 5, whereas the gradual connection is shown by the line 60 in Figure 5.

## Claims

1. A method of automatically connecting a teat cup to a teat of an animal to be milked, in which method, after the position of a teat or at least part of a teat has been determined by means of a computer, the teat cup is moved so that the opening is located under the end of the teat and is subsequently moved in a vertical and horizontal direction, to the point where the teat merges into the remaining part of the udder, until the teat cup has been connected to the teat wherein the method comprises the step of establishing that the teat forms an angle relative to a vertical plane,
and wherein the step of moving the teat cup so that its opening is located under the end of the teat is performed after the step of establishing that the teat forms an angle relative to the vertical plane,
and wherein the subsequent movement of the teat cup in a vertical and in a horizontal direction is performed so as to move the teat cup to the point where the teat merges into the remaining part of the udder,
**characterised in that**
in the subsequent movement the teat cup is moved consecutively in a vertical and in a horizontal direction.

2. A method as claimed in claim 1,
**characterised in that** the position of the teat and the angle formed by the teat relative to the vertical plane are determined by the operator and programmed in the computer.

3. A method as claimed in any one of the claims 1 or 2, **characterised in that** the position of the teat and the angle formed by the teat relative to the vertical plane are determined automatically by means of a sensor, such as a laser.

4. A method as claimed in any one of the claims 1 or 2, **characterised in that** the position of the teat and the angle formed by the teat relative to the vertical plane are determined by means of picture recognition of the teat.

5. A method as claimed in any one of the preceding claims, **characterised in that** the position of the teat and the angle formed by the teat relative to the vertical plane are updated in the computer.

6. A method as claimed in any one of the preceding claims, **characterised in that** the upward and sideward movement of the teat cup during connection to the teat is effected on the basis of a period of time which is recorded in the computer.

7. A method as claimed in any one of claims 1 to 5,
**characterised in that** the upward and sideward movement of the teat cup during connection to the teat is effected on the basis of a measured vacuum difference in the teat cup.

8. A method as claimed in claim 1,
**characterised in that** the movement of the teat cup in a vertical and in a horizontal direction, consecutively, until it has been connected to the teat is carried out via a previously chosen path.

9. A method as claimed in claim 8,
**characterised in that** the length and/or the thickness of the teat are/is determined by the operator and programmed in the computer.

10. A method as claimed in claim 8,
**characterised in that** the length and/or the thickness of the teat are/is determined by means of a sensor, such as a laser.

11. A method as claimed in claim 8,
**characterised in that** the length and/or the thickness of the teat are/is determined by means of picture recognition of the teat.

12. An implement comprising a milking robot (8) for automatically connecting teat cups (53; 54) to the teats of an animal, respectively disconnecting same therefrom, said implement comprising a computer and an animal identification system in which the position of the teat is recorded per animal, said implement being suitable for applying a method as claimed in any one of the claims 1 to 11,
**characterised in that**
in the animal identification system the angle formed by a teat relative to a vertical plane is recorded per animal.

13. An implement as claimed in claim 12, **characterised in that** the milking robot (8) comprises a sensor (56), such as a laser.

14. An implement as claimed in claim 12 or 13, **characterised in that** the milking robot (8) comprises a camera and picture recognition means, as well as a telemeter.

15. An implement as claimed in any one of claims 12 to 14, **characterised in that** a teat cup (53; 54) is provided with a vacuum sensor which is capable of measuring differences in pressure during the connection of the teat cup.

## Patentansprüche

1. Verfahren zum automatischen Anschließen eines Zitzenbechers an eine Zitze eines zu melkenden Tieres, wobei bei dem Verfahren nach Ermittlung der Position einer Zitze oder zumindest eines Teiles einer Zitze mittels eines Computers der Zitzenbecher derart bewegt wird, daß seine Öffnung unter dem Ende der Zitze angeordnet ist, und anschließend nacheinander oder gleichzeitig in vertikaler und in horizontaler Richtung bewegt wird zu einer Stelle, an der die Zitze in den weiteren Teil des Euters übergeht, bis der Zitzenbecher an die Zitze angeschlossen worden ist, wobei das Verfahren den Verfahrensschritt des Ermittelns umfaßt, ob die Zitze einen Winkel mit einer vertikalen Ebene bildet, und wobei der Verfahrensschritt des Bewegens des Zitzenbechers derart, daß seine Öffnung unter dem Ende der Zitze angeordnet ist, nach dem Verfahrensschritt des Ermittelns durchgeführt wird, ob die Zitze einen Winkel mit einer vertikalen Ebene bildet, und wobei das anschließende Bewegen des Zitzenbechers in vertikaler und in horizontaler Richtung derart durchgeführt wird, daß der Zitzenbecher zu der Stelle bewegt wird, wo die Zitze in den übrigen Teil des Euters übergeht,
**dadurch gekennzeichnet, daß** in der anschließenden Bewegung der Zitzenbecher aufeinanderfolgend in einer vertikalen und einer horizontalen Richtung bewegt wird.

2. Verfahren nach Anspruch 1,
**dadurch gekennzeichnet, daß** die Position der Zitze und der Winkel, den die Zitze mit der vertikalen Ebene bildet, von der Bedienungsperson ermittelt und in den Computer eingegeben werden.

3. Verfahren nach Anspruch 1 oder 2,
**dadurch gekennzeichnet, daß** die Position der Zitze und der Winkel, den die Zitze mit der vertikalen Ebene bildet, mit Hilfe eines Sensors, wie z. B. eines Lasers, automatisch ermittelt werden.

4. Verfahren nach Anspruch 1 oder 2,
**dadurch gekennzeichnet, daß** die Position der Zitze und der Winkel, den die Zitze mit der vertikalen Ebene bildet, mittels Bilderkennung der Zitze ermittelt werden.

5. Verfahren nach einem der vorhergehenden Ansprüche,
**dadurch gekennzeichnet, daß** die Position der Zitze und der Winkel, den die Zitze mit der vertikalen Ebene bildet, in dem Computer aktualisiert werden.

6. Verfahren nach einem der vorhergehenden Ansprüche,
**dadurch gekennzeichnet, daß** die Aufwärts- und Seitwärtsbewegung des Zitzenbechers während des Anschließens an die Zitze auf der Basis eines Zeitraumes durchgeführt wird, der im Computer gespeichert ist.

7. Verfahren nach einem der Ansprüche 1 bis 5,
**dadurch gekennzeichnet, daß** die Aufwärts- und Seitwärtsbewegung des Zitzenbechers während des Anschließens an die Zitze auf der Basis eines gemessenen Vakuumunterschiedes in dem Zitzenbecher durchgeführt wird.

8. Verfahren nach einem der vorhergehenden Ansprüche,
**dadurch gekennzeichnet, daß** die aufeinanderfolgende Bewegung des Zitzenbechers in vertikaler und in horizontaler Richtung bis zum Anschluß an die Zitze nach einem zuvor festgelegten Bewegungsweg erfolgt.

9. Verfahren nach Anspruch 8,
**dadurch gekennzeichnet, daß** die Länge und/oder die Dicke der Zitze durch die Bedienungsperson ermittelt und in den Computer eingegeben werden/wird.

10. Verfahren nach Anspruch 8,
**dadurch gekennzeichnet, daß** die Länge und/oder die Dicke der Zitze mit Hilfe eines Sensors, wie z. B. eines Lasers, ermittelt werden/wird.

11. Verfahren nach Anspruch 8,
**dadurch gekennzeichnet, daß** die Länge und/oder die Dicke der Zitze mittels Bilderkennung der Zitze ermittelt werden/wird.

12. Vorrichtung mit einem Melkroboter (8) zum automatischen Anschließen von Zitzenbechern (53; 54) an die Zitzen eines Tieres bzw. zum Abnehmen von diesen, wobei die Vorrichtung einen Computer und ein Tieridentifikationssystem umfaßt, in welchem die Position der Zitze für jedes Tier aufgezeichnet ist, wobei die Vorrichtung zur Durchführung eines Verfahrens nach einem der Ansprüche 1 bis 11 geeignet ist,
**dadurch gekennzeichnet, daß** in dem Tieridentifikationssystem der von einer Zitze mit einer vertikalen Ebene gebildete Winkel für jedes Tier aufgezeichnet wird.

13. Vorrichtung nach Anspruch 12,
**dadurch gekennzeichnet, daß** der Melkroboter (8) einen Sensor (56), wie z. B. einen Laser, umfaßt.

14. Vorrichtung nach Anspruch 12 oder 13,
**dadurch gekennzeichnet, daß** der Melkroboter (8) eine Kamera und eine Bilderkennungsvorrichtung sowie einen Entfernungsmesser umfaßt.

15. Vorrichtung nach einem der Ansprüche 12 bis 14,
**dadurch gekennzeichnet, daß** ein Zitzenbecher (53; 54) mit einem Vakuumsensor versehen ist, der in der Lage ist, Druckunterschiede während des Anschließens des Zitzenbechers zu messen.

## Revendications

1. Méthode de connexion automatique d'un gobelet trayeur au trayon d'un animal à traire, dans laquelle, une fois que la position d'un trayon ou d'au moins une partie d'un trayon a été déterminée au moyen d'un ordinateur, le gobelet trayeur est déplacé de façon à ce que l'ouverture soit située sous l'extrémité du trayon et est ensuite déplacé dans une direction verticale et dans une direction horizontale, jusqu'au point où le trayon fusionne avec la partie restante de la mamelle, jusqu'à ce que le gobelet trayeur soit connecté au trayon,
dans laquelle la méthode comprend l'étape consistant à établir que le trayon forme un angle par rapport à un plan vertical,
et dans laquelle l'étape de déplacement du gobelet trayeur de façon à ce que son ouverture soit située sous l'extrémité du trayon est effectuée après l'étape consistant à établir que le trayon forme un angle par rapport à un plan vertical,
et dans laquelle le déplacement ultérieur du gobelet trayeur dans une direction verticale et dans une direction horizontale est effectué de façon à déplacer le gobelet trayeur jusqu'au point où le trayon fusionne avec la partie restante de la mamelle,
**caractérisée en ce que**
lors du déplacement ultérieur le gobelet trayeur est déplacé consécutivement dans une direction verticale et dans une direction horizontale.

2. Méthode selon la revendication 1, **caractérisée en ce que** la position du trayon et l'angle formé par le trayon par rapport au plan vertical sont déterminés par l'opérateur et programmés dans l'ordinateur.

3. Méthode selon la revendication 1 ou 2, **caractérisée en ce que** la position du trayon et l'angle formé par le trayon par rapport au plan vertical sont déterminés automatiquement au moyen d'un capteur tel qu'un laser.

4. Méthode selon la revendication 1 ou 2, **caractérisée en ce que** la position du trayon et l'angle formé par le trayon par rapport au plan vertical sont déterminés au moyen d'une reconnaissance par image du trayon.

5. Méthode selon l'une quelconque des revendications précédentes, **caractérisée en ce que** la position du trayon et l'angle formé par le trayon par rapport au plan vertical sont mis à jour dans l'ordinateur.

6. Méthode selon l'une quelconque des revendications précédentes, **caractérisée en ce que** le déplacement ascendant et latéral du gobelet trayeur pendant la connexion au trayon est effectué sur la base d'une période temporelle qui est enregistrée dans l'ordinateur.

7. Méthode selon l'une quelconque des revendications 1 à 5, **caractérisée en ce que** le déplacement ascendant et latéral du gobelet trayeur pendant la connexion au trayon est effectué sur la base d'une différence de vide mesurée dans le gobelet trayeur.

8. Méthode selon la revendication 1, **caractérisée en ce que** le déplacement du gobelet trayeur dans une direction verticale et dans une direction horizontale, consécutivement, jusqu'à ce qu'il soit connecté au trayon, est réalisé via un trajet sélectionné au préalable.

9. Méthode selon la revendication 8, **caractérisée en ce que** la longueur et/ou l'épaisseur du trayon est/sont déterminée(s) par l'opérateur et programmée (s) dans l'ordinateur.

10. Méthode selon la revendication 8, **caractérisée en ce que** la longueur et/ou l'épaisseur du trayon est/sont déterminée(s) au moyen d'un capteur tel qu'un laser.

11. Méthode selon la revendication 8, **caractérisée en ce que** la longueur et/ou l'épaisseur du trayon est/sont déterminée(s) au moyen d'une reconnaissance par image du trayon.

12. Instrument comprenant un robot de traite (8) pour connecter automatiquement des gobelets trayeurs (53 ; 54) aux trayons d'un animal, en déconnecter ceux-ci respectivement, ledit instrument comprenant un ordinateur et un système d'identification d'animal dans lequel la position des trayons est enregistrée pour chaque animal, ledit instrument étant adapté pour mettre en oeuvre une méthode selon l'une quelconque des revendications 1 à 11, **caractérisé en ce que** dans le système d'identification d'animal, l'angle formé par un trayon par rapport à un plan vertical est enregistré pour chaque animal.

13. Instrument selon la revendication 12, **caractérisé en ce que** le robot de traite (8) comprend un capteur (56) tel qu'un laser.

14. Instrument selon la revendication 12 ou 13, **caractérisé en ce que** le robot de traite (8) comprend un appareil photo et un moyen de reconnaissance par image, tout comme un télémètre.

15. Instrument selon l'une quelconque des revendications 12 à 14, **caractérisé en ce qu'**un gobelet trayeur (53 ; 54) est muni d'un capteur de vide qui est capable de mesurer les différences de pression pendant la connexion du gobelet trayeur.
